# EUROPÄISCHE PATENTSCHRIFT

(11) **EP 2 251 268 B1**
(45) Veröffentlichungstag und Bekanntmachung des Hinweises auf die Patenterteilung: **27.06.2012**
(21) Anmeldenummer: 10157188.3
(22) Anmeldetag: 22.03.2010
(51) Int. Cl.: B65C 9/06, G01N 21/90

(54) **Vorrichtung zum Erkennen von Erhebungen und/oder Vertiefungen auf Flaschen, insbesondere in einer Etikettiermaschine**
Device for recognising ridges and/or grooves on bottles, in particular in a labelling machine
Dispositif de reconnaissance de soulèvements et/ou abaissements sur des bouteilles, notamment dans une étiqueteuse

(30) Priorität: 12.05.2009 DE 102009020919
(43) Veröffentlichungstag der Anmeldung: 17.11.2010
(73) Patentinhaber: Krones AG, 93073 Neutraubling (DE)
(72) Erfinder: Kwirandt, Rainer, 93092 Barbing (DE)
(74) Vertreter: Grünecker, Kinkeldey, Stockmair & Schwanhäusser

(56) Entgegenhaltungen:
- EP-A1- 0 491 555
- EP-A1- 1 006 350
- WO-A1-2007/029048
- WO-A1-2010/049137
- WO-A2-2007/095928
- DE-A1-102004 040 164
- DE-A1-102008 018 096
- JP-A- 8 015 163

## Beschreibung

Die Erfindung betrifft eine Vorrichtung zum Erkennen von Erhebungen und/oder Vertiefungen auf Flaschen gemäß dem Oberbegriff des Patentanspruchs 1 sowie ein Verfahren zur Anwendung der Vorrichtung.

Erhebungen und/oder Vertiefungen an Flaschenoberflächen können z. B. an Pressnähten und reliefartigen Prägungen am Flaschenkörper, den sogenannten Embossings, auftreten.

Flaschen mit Pressnaht, wie. z. B. Flaschen für Getränke, sind bevorzugt so zu etikettieren, dass die Pressnaht nicht vom Etikett bedeckt wird. Ferner soll das Etikett gegebenenfalls zu einem Embossing ausgerichtet werden. Um die Lage einer Pressnaht oder eines Embossings zu erkennen und eine spätere Drehung der Flasche in eine gewünschte Position zu ermöglichen, wird bekanntermaßen ein auf dem Flaschenkörper gebildeter Lampenreflex in verschiedenen Drehlagen der Flasche auf Unregelmäßigkeiten untersucht. Dabei kann in der Regel immer nur ein Teil der Pressnaht bzw. des Embossings vom Lampenreflex erfasst werden.

Die DE 10 2004 040 164 A1 beschreibt eine Inspektionsvorrichtung gemäß dem Oberbegriff des Anspruchs 1. Eine solche Inspektionsvorrichtung umfasst beispielsweise einen halbkreisförmigen, gleichmäßig ausgeleuchteten Lampenschirm, der koaxial um die Symmetrieachse einer zu untersuchenden Flasche angeordnet ist und der eine Öffnung aufweist, durch die die Oberfläche der Flasche mit einer Kamera auf unregelmäßige Reflexe untersucht wird. Bei profilierten Flaschenoberflächen können die Ränder der Lichtreflexe jedoch unregelmäßig geformt und gerade bei kontrastarmer Darstellung schwer zu erkennen sein. Es kann ebenso vorkommen, dass sich die Pressnaht nur in einem kleinen Bereich am Rand des Lichtreflexes darstellen lässt. Mit der bekannten Technik wird die Pressnaht deshalb nicht immer zuverlässig erkannt.

Die WO 2010/049137 A1 ist Stand der Technik gemäß Artikel 54 (3) EPÜ und beschreibt eine Inspektionsvorrichtung mit den Merkmalen des Oberbegriffs des Anspruchs 1 sowie mit einem Leuchtschirm, auf dem Bereiche unterschiedlicher Leuchtdichte ausgebildet sind.

Embossings sind bevorzugt im Bereich der Flaschenschulter angeordnet. Bei der üblichen, horizontalen Blickrichtung der Kamera liegt das Embossing dann oft außerhalb des Lampenreflexes. Daher entstehen am Embossing vergleichsweise kontrastarme, unregelmäßige Reflexe, deren Form sich bei Drehung der Flasche verändert.

Aufgrund dieser Probleme ist häufig eine Kontrollmessung mit einer zusätzlichen Feinausrichtung der Flasche nötig. Dies erfordert eine zusätzliche Inspektionsvorrichtung und verursacht einen unerwünscht großen Platzbedarf in der Etikettiermaschine.

Es ist somit Aufgabe der Erfindung, Pressnähte über einen möglichst großen Bereich der Flaschenwand zuverlässig zu erkennen und Embossings in verschiedenen Drehlagen der Flasche möglichst zuverlässig zu orten.

Dies wird dadurch erreicht, dass auf dem Leuchtschirm der Beleuchtungseinheit Bereiche unterschiedlicher Leuchtdichte ausgebildet sind. Diese überlagern im Reflex die zu erkennenden Strukturen und verursachen unterschiedlich helle Reflexzonen, insbesondere mit hellen Linien auf dunklem Untergrund und dunklen Linien auf hellem Untergrund. Dies erleichtert die Erkennung von Pressnähten und Embossings.

Außerdem ist der Übergang der Leuchtdichte zwischen den Bereichen unterschiedlicher Leuchtdichte graduell. Dies unterstützt die Auswertung der mit Bandpässen gefilterten Kamerabilder.

Vorzugsweise sind die Bereiche unterschiedlicher Leuchtdichte in einem Streifenmuster angeordnet. Damit wird im Reflex ein regelmäßiges, den Bildkontrast verstärkendes Muster bereitgestellt.

Bei einer Ausführungsform umfasst das Streifenmuster zwei bis vier dunkle Streifen. Dies verbessert die Darstellung bei im Wesentlichen zylindrischen Flaschenformen, die vertikale Strukturen schärfer und zusammengedrängter abbilden als horizontale Strukturen.

Vorzugsweise wechseln sich die Bereiche unterschiedlicher Leuchtdichte in horizontaler Richtung ab. Dies verbessert die Erkennung von vertikal verlaufenden Pressnähten, die hauptsächlich Reflexstörungen in horizontaler Richtung verursachen.

Bei einer bevorzugten Ausführungsform sind die Bereiche unterschiedlicher Leuchtdichte als Bereiche mit unterschiedlicher Lichtdurchlässigkeit ausgebildet. Damit lassen sich dunkle Schirmbereiche auf einfache Weise realisieren.

Vorzugsweise umfasst der Leuchtschirm eine Folie, auf oder in der die Bereiche unterschiedlicher Leuchtdichte ausgebildet sind. Dies ermöglicht eine kostengünstige und flexible Realisierung von Bereichen unterschiedlicher Leuchtdichte, z. B. durch Bedrucken der Folie, sowie einen einfachen Wechsel zwischen verschiedenen Beleuchtungsmustern.

Bei einer bevorzugten Ausführungsform umfasst die Beleuchtungseinheit ferner eine Lichtquelle und der Leuchtschirm ferner eine Streuscheibe, wobei die Folie zwischen der Lichtquelle und der Streuscheibe angeordnet ist. Auf diese Weise lassen sich unerwünschte Druckartefakte der Folie glätten, wie z. B. überlagerte Raster und Streifen.

Vorzugsweise hat der Leuchtschirm die Form eines zur Flasche hin offenen Trichters. Auf diese Weise kann ein flächig ausgedehnter Reflex sowohl auf dem zylindrischen Flaschenabschnitt als auch auf der Flaschenschulter erzeugt werden.

Bei einer bevorzugten Ausführungsform ist die Kamera in Richtung des Flaschenbodens geneigt, wobei ihre optische Achse mit der Hauptachse der Flasche einen Winkel von höchstens 80° einschließt. So können nicht nur große Bereiche der Pressnaht abgebildet werden, sondern der Lampenreflex ermöglicht auch eine besonders günstige Darstellung des Schulterbereichs der Flasche.

Vorzugsweise umfasst die Vorrichtung ferner ein Transportmittel für die Flasche zum Durchfahren eines Bildaufnahmebereichs der Kamera und einen auf dem Transportmittel angeordnete drehbare Halterung zur Aufnahme der Flasche. Damit kann ein kontinuierlicher Flaschenstrom in verschiedenen Drehlagen inspiziert werden.

Eine weitere Ausführungsform umfasst eine Berechnungseinheit zum Auswerten des erfassten Reflexes, zum Lokalisieren der Erhebungen und/oder Vertiefungen und Ermitteln einer Ist-Drehlage der Flasche. Dadurch kann im Anschluss eine Soll-Drehlage angefahren werden.

Die Aufgabe wird außerdem durch ein Verfahren zur Anwendung der erfindungsgemäßen Vorrichtung gelöst, bei dem die Flasche mit dem Leuchtschirm beleuchtet wird, so dass der Lichtreflex die zu erkennenden Erhebungen und/oder Vertiefungen zumindest zeitweise überlappt, und der Reflex mit einer Kamera abgebildet wird. Das Überlagern der zu erkennenden Strukturen mit den Bereichen unterschiedlicher Helligkeit des Leuchtschirms verursacht unterschiedlich helle Reflexzonen, insbesondere helle Linien auf dunklem Untergrund und dunkle Linien auf hellem Untergrund. Dies erleichtert die Erkennung von Pressnähten und Embossings.

Vorzugsweise wird die Flasche dabei durch einen Bildaufnahmebereich der Kamera bewegt und dabei um ihre Längsachse gedreht, so dass der Reflex in verschiedenen Drehlagen der Flasche abgebildet wird. Damit kann ein kontinuierlicher Flaschenstrom in verschiedenen Drehlagen inspiziert werden.

Bei einer bevorzugten Ausführungsform wertet eine Berechnungseinheit die Kamerabilder aus, erkennt die Lage der Erhebungen und/oder Vertiefungen und ermittelt daraus eine Ist-Drehlage der Flasche. Dadurch kann im Anschluss eine Soll-Drehlage angefahren werden.

Bevorzugte Ausführungsformen sind in der Zeichnung dargestellt und nachstehend erläutert. Es zeigen:
- Fig. 1: eine schematische Draufsicht auf eine erste Ausführungsform, gesehen durch die Schnittebene C - C der Fig. 2;
- Fig. 2: eine schematische Seitenansicht der ersten Ausführungsform, gesehen durch die Schnittebene A - A der Fig.1;
- Fig. 3: eine schematische Vorderansicht der ersten Ausführungsform, gesehen durch die Schnittebene B - B der Fig. 1;
- Fig. 4: eine schematische Darstellung eines Kamerabilds mit einem Lichtreflex zur Erken- nung von Erhebungen bzw. Vertiefungen auf einer zu untersuchenden Flasche;
- Fig. 5: eine schematische Draufsicht auf eine zweite Ausführungsform, gesehen durch die Schnittebene E - E der Fig. 6; und
- Fig. 6: eine schematische Seitenansicht der zweiten Ausführungsform, gesehen durch die Schnittebene D - D der Fig. 5.

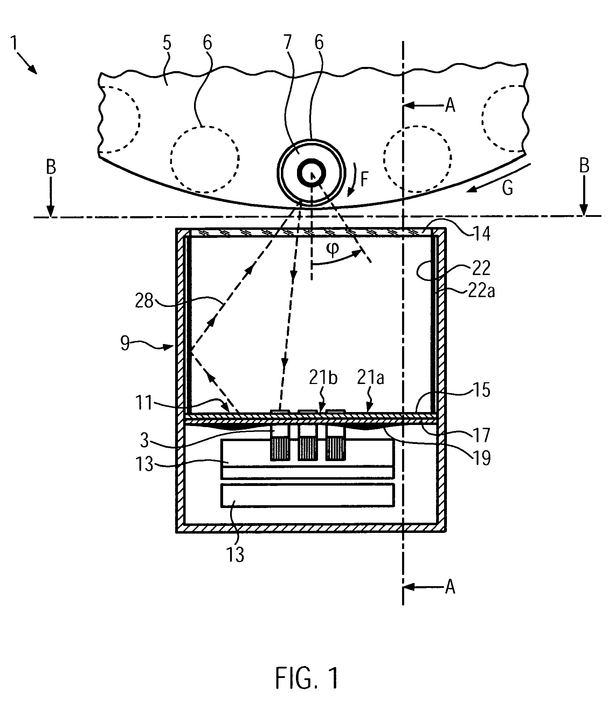

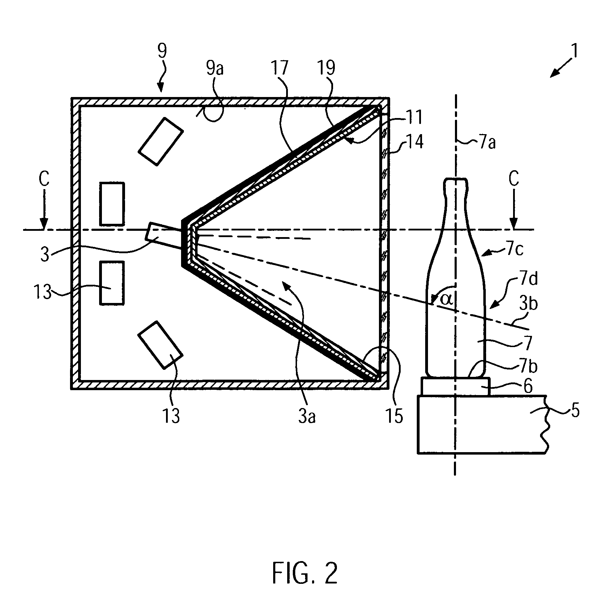

Wie Fig.1 und 2 erkennen lassen, umfasst die erfindungsgemäße Inspektionsvorrichtung 1 drei Kameras 3, jeweils mit einem durch gestrichelte Linien angedeuteten Bildbereich 3a, zur Abbildung einer auf einem rotierenden Transportmittel 5 (siehe Pfeil G) an den Kameras 3 vorbei laufenden Flasche 7. Die Kameras 3 sind in eine Beleuchtungseinheit 9 mit einem trichterförmigen Leuchtschirm 11, mehreren Leuchten 13 und einer Schutzscheibe 14 integriert. Die Flasche 7 wird von einer drehbaren Halterung 6, wie z. B. einem motorgetriebenen Drehteller mit einer absenkbaren Zentriervorrichtung, stehend und bezüglich der Hauptachse 7a der Flasche 7 zentriert gehalten. Gestrichelt angedeutet sind Halterungen 6 für weitere Flaschen 7 zur Untersuchung eines kontinuierlichen Flaschenstroms. Der Antrieb der Halterungen 6 ist nicht dargestellt und durch den Pfeil F symbolisiert.

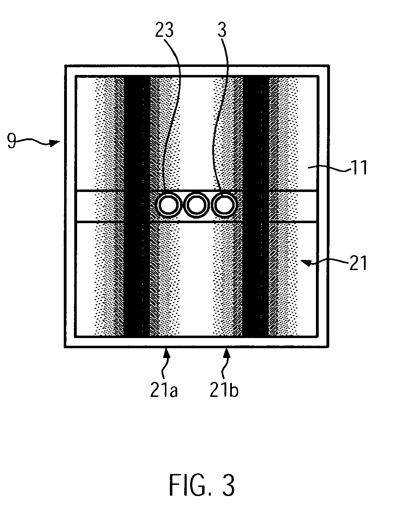

Der Leuchtschirm 11 umfasst auf seiner der Flasche 7 zugewandten Seite eine Streuscheibe 15, wie z. B. eine Milchglasscheibe oder durchscheinende Kunststoffplatte, und auf seiner den Leuchten 13 zugewandten Seite eine mit einem Farbstoff 19 abschnittsweise unterschiedlich stark bedruckte Folie 17. Die Schichtdicke des Farbstoffs 19 ist in den Figuren zum besseren Verständnis stark übertrieben dargestellt, wobei Bereiche großer Schichtdicke Bereichen geringer Leuchtdichte entsprechen und umgekehrt. Die Lichtdurchlässigkeit des Farbstoffs 19 variiert in horizontaler Richtung entlang des Leuchtschirms 11 wiederholt, so dass sich auf dem Leuchtschirm 11 dunkle Bereiche 21 a mit niedriger Leuchtdichte und helle Bereiche 21 b mit hoher Leuchtdichte in horizontaler Richtung abwechseln. Der Übergang der Leuchtdichte von den dunklen Bereichen 21 a zu den hellen Bereichen 21 b und umgekehrt ist graduell. Insbesondere aus der Parallelperspektive der Fig. 3 wird deutlich, dass die Bereiche 21a,b unterschiedlicher Leuchtdichte auf dem Leuchtschirm 11 ein im Wesentlichen vertikal ausgerichtetes Streifenmuster 21 bilden.

Wie aus Fig. 1 ferner zu ersehen ist, umfasst die Beleuchtungseinheit 9 seitliche Spiegel 22, die bevorzugt als auf einem transparenten Spiegelkörper 22a befestigte Spiegelfolien ausgebildet sind. Diese spiegeln von dem Leuchtschirm 11 emittiertes Licht 28 in Richtung der Flasche 7.

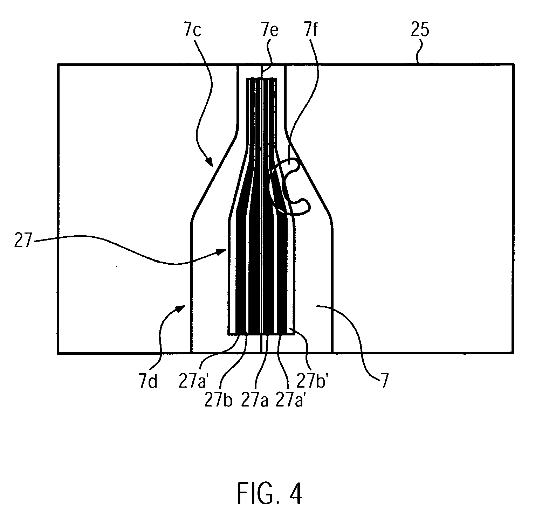

Gemäß Fig. 2 sind die Kameras 3 in Richtung des Flaschenbodens 7b geneigt, wobei ihre optische Achse 3b mit der Hauptachse 7a der Flasche einen Winkel α von höchstens 80° einschließt. Die Kamera 3 blickt dabei durch eine Kameraöffnung 23 im Leuchtschirm 11 schräg nach unten, auf den Übergangsbereich der Flaschenschulter 7c mit dem zylindrischen Abschnitt 7d der Flasche 7. Mit der Kamera 3 erhält man so das in Fig. 4 schematisch dargestellte Kamerabild 25 mit dem Lichtreflex 27. Dieser ist ein durch die Flasche 7 verzerrtes Spiegelbild des Leuchtschirms 11. Die dunklen bzw. hellen Streifen 27a,b des Lichtreflexes 27 entsprechen dabei im Wesentlichen den Bereichen 21 a,b des Streifenmusters 21.

Der Reflex 27 enthält zusätzliche dunkle bzw. helle Streifen 27a' und 27b', die den an den Spiegeln 22 gespiegelten Bereichen 21 a,b, entsprechen. Dieser an den Spiegeln 22 gespiegelte Anteil des Reflexes 27 ist in Fig. 1 schematisch durch den Lichtstrahl 28 angedeutet. Die Anzahl der gespiegelten Streifen 27a' und 27b' im Reflex 27 hängt von der Dimensionierung der Beleuchtungseinheit 9 und dem Abstand zwischen dem Leuchtschirm 11 und der Flasche 7 ab. Würde dieser Abstand im Beispiel sukzessive vergrößert, so würden die seitlichen Ränder des Reflexes 27 nach innen wandern und zunächst die äußeren Streifen 27b', dann die benachbarten Streifen 27a' aus dem Reflex 27 "ausgeblendet".

In Fig. 4 ebenso dargestellt ist eine Pressnaht 7e und ein Embossing 7f, die reliefartig und/oder als Vertiefung auf der Flasche 7 ausgebildet sind. In verschiedenen Drehlagen ϕ, z. B. in Abständen von je 30 °, aufgenommene Kamerabilder 25 werden in einer (nicht dargestellten) Berechnungseinheit ausgewertet, um die Pressnaht 7e und/oder das Embossing 7f zu lokalisieren und auf diese Weise eine Ist-Drehlage ϕₗ der Flasche 7 zu ermitteln. In der Regel wird die Flaschenoberfläche 7c, 7d dazu vollständig vor den Kameras 3 abgewickelt.

Im Kamerabild 25 erscheinen die Konturen der Pressnaht 7e und des Embossings 7f scharf abgegrenzt, z. B. als helle Linien auf den dunklen Streifen 27a,a' bzw. als dunkle Linien auf den hellen Streifen 27b,b'. Demgegenüber sind die Übergänge zwischen den Streifen 27a,a'b,b' wie die Übergänge zwischen den Bereichen 21 a,b des Streifenmusters 21 graduell. Dies unterstützt eine Bandpassfilterung bei der Auswertung des Kamerabilds 25 zur Unterscheidung zwischen den Konturen der Pressnaht 7e bzw. dem Embossing 7f und den Streifen 27a,a'b,b'. Die Streifen 27a,a',b,b' des Reflexes 27 sind gegenüber den Bereichen 21 a,b des Leuchtschirms perspektivisch verzerrt und erscheinen aufgrund der im Wesentlichen zylindrischen Form der Flasche 7 in horizontaler Richtung komprimiert.

Die Anzahl der dunklen Streifen 27a,a' im Reflex 27 beträgt vorzugsweise drei bis acht. Damit lassen sich Pressnähte 7c und Embossings 7d gleichermaßen gut erkennen. Je nach Anzahl der an den Spiegeln 22 gespiegelten und im Reflex 27 nutzbaren dunklen Bereiche 21 a beträgt die Anzahl der Bereiche 21 a des Leuchtschirms 11 vorzugsweise eins bis acht, bei einer besonders günstigen Weiterbildung der Erfindung zwei bis vier. Die Vorrichtung ist jedoch nicht auf die oben jeweils genannte Anzahl dunkler Streifen 27a,a' bzw. 21 a beschränkt.

Um die Pressnaht 7e möglichst zuverlässig erkennen zu können, sind die Streifen 27a,a',b,b' im Wesentlichen parallel zur Pressnaht 7e ausgerichtet. Es ist allerdings auch möglich, die Streifen 27a,a',b,b' schräg zur Pressnaht 7e auszurichten, z. B. unter einem Winkel von bis zu 10°. Dies verbessert die Pressnahterkennung in der Mitte des Kamerabildes 25. In einem solchen Fall sind die Bereiche 21 a,b auf dem Leuchtschirm 11 entsprechend schräg anzuordnen, z. B. unter Winkeln von bis zur 10° zur Vertikalen.

Unter einem "im Wesentlichen vertikal ausgerichteten" Streifenmuster 21 ist zu verstehen, dass das Streifenmuster 21 auf einer aufrecht stehenden Flasche 7 einen Reflex 27 mit im Wesentlichen parallel zur Pressnaht 7e bzw. der Hauptachse 7a der Flasche 7 ausgerichteten Streifen 27a,a'b,b' erzeugt. Bei einer davon abweichenden Untersuchungsposition wäre die Ausrichtung des Streifenmusters 21 auf dem Leuchtschirm 11 entsprechend anzupassen.

Es ist generell möglich, andere Helligkeitsverteilungen auf dem Leuchtschirm 11 vorzusehen, z. B. im Wesentlichen horizontal ausgerichtete Streifenmuster oder Ringmuster, um speziell geformte Erhebungen und/oder Vertiefungen auf der Flasche 7 besonders zuverlässig erkennen zu können.

Die Kameras 3 sind so geneigt, dass nicht nur große Bereiche der Pressnaht 7e in einem Kamerabild 25 betrachtet werden können. Auch eignet sich der Reflex 27 dann besonders gut zur Erkennung von Embossings 7f im Schulterbereich 7c der Flasche. Je nach Flaschenform kann der Winkel α beispielsweise 30 bis 80° betragen, bei Bedarf aber auch 80 bis 90°. Der Reflex 27 schließt das Embossing 7f in vertikaler Richtung vorzugsweise vollständig ein, damit es in verschiedenen Drehlagen der Flasche 7 zuverlässig erkannt werden kann.

Für eine unkomplizierte Anpassung der Inspektionsvorrichtung 1 an unterschiedliche Flaschentypen und/oder zu erkennende Strukturen 7e,f, insbesondere zur Höhenverstellung des Reflexes 27, ist die Beleuchtungseinheit 9 vorzugsweise höhenverstellbar ausgebildet.

Die erfindungsgemäße Vorrichtung 1 kann mit mehreren Kameras 3 bestückt werden, deren Bildaufnahmebereiche 3a sich seitlich überlappen, so dass die an den Kameras 3 vorbei laufende Flasche 7 bei gleichzeitiger Drehung auf der Halterung 6 in verschiedenen, vorgegeben Drehlagen ϕ über ihren gesamten Umfang abgebildet wird. Die Anzahl der Kameras 3 ist nicht auf das gezeigte Beispiel beschränkt. Vorzugsweise ist der Abstand zwischen den Kameras 3 möglichst gering, um möglichst einheitliche Abbildungsbedingungen zu gewährleisten.

Der Leuchtschirm 11 ist trichterförmig und möglichst großflächig, um einen möglichst großen Reflex 27 zu erhalten, der nahtlos vom zylindrischen Teil 7d der Flasche 7 in die Flaschenschulter 7c übergeht. Dadurch kann die für eine zuverlässige Inspektion der Flasche 7 nötige Anzahl an Kamerabildern 25 minimiert werden.

Sowohl der Leuchtschirm 11 als auch die Folie 17 bestehen aus mehreren, vorzugsweise ebenen Segmenten. Dies ermöglicht eine einfache Integration der bedruckten Folien 17 in den Leuchtschirm 11. Der Leuchtschirm 11 könnte jedoch auch einstückig ausgebildet sein und/oder gekrümmte Flächen umfassen, wie z. B. Ellipsoidsegmente.

Der graduelle Übergang der Leuchtdichte von den Bereichen 21 a zu den Bereichen 21 b und umgekehrt entspricht vorzugsweise einem wellenförmigen Muster, beispielsweise einem Sinusoid.

Der Farbstoff 19 kann auf einer beliebigen Seite der Folie 17 oder auch auf beiden Seiten der Folie 17 aufgedruckt sein. Ebenso ist es möglich, den Farbstoff in die Folie 17 einzuarbeiten. Es ist auch denkbar, den Farbstoff 19 direkt auf die der Leuchte 13 zugewandte Seite der Streuscheibe 15 aufzubringen. Die Verwendung einer Folie 17 hat jedoch den Vorteil, dass zwischen verschiedenen Streifenmustern 21 einfach gewechselt werden kann, um die Vorrichtung an bestimmte Flaschenformen und/oder Strukturen auf der Flaschenoberfläche anzupassen.

Der Farbstoff 19 hat zweckmäßigerweise in erster Linie eine optische Absorptionswirkung, um die Bereiche 21 a mit niedriger Leuchtdichte auszubilden. Es wäre jedoch auch möglich, die Bereiche 21 b mit hoher Leuchtdichte mit Hilfe eines fluoreszierenden Farbstoffs 19 auszubilden. Die Bereiche 21a,b könnten auch durch Kombination von absorbierenden und/oder fluoreszierenden Farbstoffen 19 ausgebildet werden.

Die Lichtquellen 13 sind z. B. LED-Hintergrundleuchten. Es können aber auch andere Leuchtentypen verwendet werden. Die Anordnung der Lichtquellen 13 ist nicht auf das Beispiel in Fig. 1 und 2 beschränkt. Ebenso könnte nur eine Lichtquelle 13 in der Beleuchtungseinheit 9 verwendet werden.

Alternativ könnten die dunklen und hellen Bereiche 21 a,b durch bereichsweise unterschiedlich helle Beleuchtung des Leuchtschirms 11 erzeugt werden. Die Lichtquellen 13 könnten zu diesem Zweck als LED-Matrix ausgebildet sein, deren LED-Elemente unterschiedlich hell leuchten. Je nach Anzahl und Größe der Elemente wären diese in einem geeigneten Abstand zur Streuscheibe 15 anzuordnen, so dass ein geglättetes Leuchtmuster 21 mit graduellen Helligkeitsübergängen ausgebildet wird. Mit dieser Variante könnten auch ohne Umbauten unterschiedliche Muster 21 erzeugt werden.

Die Beleuchtungseinheit 9 umfasst vorzugsweise reflektierende oder ausgeprägt rückstreuende Innenwände 9a, wie z. B. von Ulbrichtkugeln bekannt, um die Lichtausbeute zu erhöhen und/oder eine gleichmäßige Ausleuchtung des Leuchtschirms 11 zu gewährleisten. Dies verbessert die Qualität der Kamerabilder bei geringen Belichtungszeiten. Die Beleuchtungseinheit kann zu diesem Zweck auch mit zusätzlichen Spiegeln und/oder rückstreuenden Trennwänden (nicht gezeigt) versehen werden. Die Scheibe 14 bietet Schutz vor Verschmutzung der Beleuchtungseinheit 9, ist jedoch nicht zwingend erforderlich.

Der transparente Spiegelkörper 22a bewirkt, insbesondere im Zusammenspiel mit reflektierenden bzw. rückstreuenden Innenwänden 9a, dass der Leuchtschirm 11 auch im Übergangsbereich zu den Spiegeln 22 aus unterschiedlichen Richtungen, und somit möglichst gleichmäßig hell ausgeleuchtet wird. Dadurch werden dunkle, scharf abgegrenzte Linien am Übergang des Leuchtschirms 11 zum Spiegel 22 bzw. in den entsprechenden Bereichen des Reflexes 27 vermieden.

Das Transportmittel 5 ist vorzugsweise ein Transportkarussell, wie in Fig. 1 und 2 angedeutet. Es könnte jedoch auch linear oder kurvenförmig sein. Die Drehrichtungen F und G der Halterung 6 und des Transportmittels 5 sind vorzugsweise identisch, könnten jedoch auch gegenläufig sein.

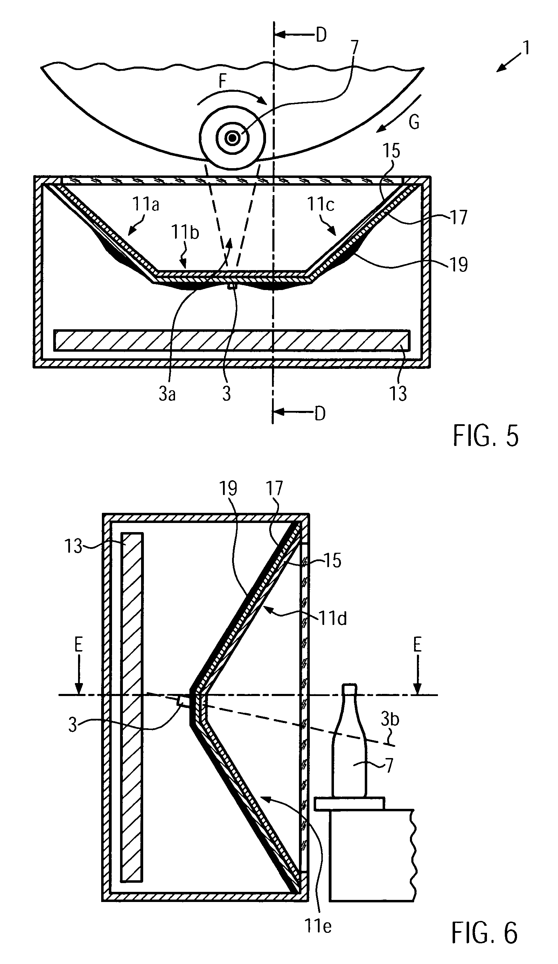

Nachfolgend ist eine zweite Ausführungsform beschrieben, die sich von der ersten Ausführungsform im Wesentlichen durch eine alternative Trichterform des Leuchtschirms 11 unterscheidet, sowie dadurch, dass keine seitlichen Spiegel 22 vorgesehen sind. Die übrigen Merkmale entsprechen, wo nicht anderslautend angegeben, denen der ersten Ausführungsform und sind daher nicht nochmals beschrieben bzw. in Fig. 5 und 6 teilweise nicht mit Bezugszeichen versehen.

Wie Fig. 5 erkennen lässt, ist der Leuchtschirm 11 der zweiten Ausführungsform auch in der Draufsicht trichterförmig. Er kann z. B. aus fünf ebenen Segmenten 11 a-e gebildet werden, die jeweils einer Untersuchungsposition der Flasche 7 innerhalb des Bildaufnahmebereichs 3a zugewandt sind. Die Bereiche 21 a,b sind bei der zweiten Ausführungsform nicht nur auf den mittleren Segmenten 11 b,d,e sondern auch auf den seitlichen Segmenten 11 a,c ausgebildet. Daher ergibt sich bei Bestrahlung der Flasche 7 ebenfalls der in Fig. 4 dargestellte Reflex 27, wobei allerdings die durch Reflexion an den Spiegeln 22 erzeugten Streifen 27a',b' der ersten Ausführungsform bei der zweiten Ausführungsform durch weitere mittels direkter Bestrahlung der Flasche 7 erzeugte Streifen 27a,b ersetzt werden. Entsprechend beträgt die bevorzugte Anzahl dunkler Bereichen 21 a des Leuchtschirms 11 bei der zweiten Ausführungsform drei bis acht.

Die dunklen und hellen Bereiche 21 a,b können je nach Formgebung des Leuchtschirms 11 unterschiedlich stark gegen die Vertikale geneigt sein, so dass im Reflex 27 im Wesentlichen vertikal ausgerichtete Streifen 27a,b resultieren. In der Vorderansicht schließen die Streifen 21 a und/oder 21 b mit der Vertikalen bzw. der Hauptachse 7a der Flasche 7 in der Parallelperspektive bevorzugt einen Winkel von höchstens 45° ein. Geeignete Streifenmuster 21 können z. B. durch Strahlverfolgung für eine vorgegebene Trichterform berechnet werden, so dass sich in der Simulation ein vorgegebener Reflex 27 auf dem zu untersuchenden Flaschentyp ergibt.

Die Merkmale der beschriebenen Ausführungsformen können kombiniert werden. Insbesondere ist die Formgebung des Leuchtschirms 11 nicht auf die gezeigten Beispiele beschränkt. Beispielsweise könnten die Schirme orthogonal gekippt werden, so dass deren Draufsicht zur Seitenansicht wird und umgekehrt. Ebenso könnten die Bereiche 21 a,b auf (nicht gezeigten) gekrümmten Abschnitten des Leuchtschirms 11 ausgebildet werden.

Mit der erfindungsgemäßen Inspektionsvorrichtung kann wie folgt gearbeitet werden:

Eine auf der Halterung 6 befestigte Flasche 7 wird bei gleichzeitiger Drehung um ihre Längsachse 7a entlang der Transportstrecke 5 in den Aufnahmebereich 3a einer Kamera 3 gefahren. Solange die Flasche 7 innerhalb des Bildbereichs 3a der Kamera 3 ist, werden in vorgegebenen Drehlagen ϕ der Flasche 7 bzw. in vorgegebenen zeitlichen Abständen, Aufnahmen 25 des Reflexes 27 gemacht und mit einer Bildauswertung in der Rechnereinheit 29 weiter verarbeitet. Verlässt die Flasche 7 den Bildbereich 3a der Kamera 3, bevor der gesamte Umfang der Flasche 7 untersucht werden konnte (je nach Transport- bzw. Drehgeschwindigkeit des Transportmittels 5 bzw. der Halterung 6), schließt sich an den Bildbereich 3a mindestens ein weiterer Bildbereich 3a einer weiteren Kamera 3 überlappend an, bis der gesamte Flaschenumfang durch die Kameraaufnahmen 25 erfasst ist. Durch Auswertung der Aufnahmen 25 in der Berechnungseinheit wird die Lage einer Pressnaht 7e und/oder eines Embossings 7f erkannt und eine Ist-Drehlage ϕₗ der Flasche 7 bzw. der Halterung 6 ermittelt, so dass anschließend eine Soll-Drehlage ϕₛ der Flasche 7 angefahren werden kann.

## Patentansprüche

1. Inspektionsvorrichtung (1) zum Erkennen von Erhebungen und/oder Vertiefungen (7e, 7f) auf Flaschen (7), insbesondere in einer Etikettiermaschine, mit:
- einer Beleuchtungseinheit (9) mit einem Leuchtschirm (11) zum Erzeugen eines Lichtreflexes (27) auf einer zu untersuchenden Flasche (7); und
- mindestens einer Kamera (3) zum Erfassen des Lichtreflexes (27);
**dadurch gekennzeichnet dass**
auf dem Leuchtschirm (11) Bereiche (21 a, 21 b) unterschiedlicher Leuchtdichte ausgebildet sind; und
der Übergang der Leuchtdichte zwischen den Bereichen (21a, 21b) unterschiedlicher Leuchtdichte graduell ist.

2. Inspektionsvorrichtung nach Anspruch 1, **dadurch gekennzeichnet, dass** die Bereiche (21 a, 21 b) unterschiedlicher Leuchtdichte in einem Streifenmuster (21) angeordnet sind.

3. Inspektionsvorrichtung nach Anspruch 2, **dadurch gekennzeichnet, dass** das Streifenmuster (21) zwei bis vier dunkle Streifen (21a) umfasst.

4. Inspektionsvorrichtung nach mindestens einem der vorigen Ansprüche, **dadurch gekennzeichnet, dass** sich die Bereiche (21 a, 21 b) unterschiedlicher Leuchtdichte in horizontaler Richtung abwechseln.

5. Inspektionsvorrichtung nach mindestens einem der vorigen Ansprüche, **dadurch gekennzeichnet, dass** die Bereiche (21 a, 21 b) unterschiedlicher Leuchtdichte als Bereiche mit unterschiedlicher Lichtdurchlässigkeit ausgebildet sind.

6. Inspektionsvorrichtung nach mindestens einem der vorigen Ansprüche, **dadurch gekennzeichnet, dass** der Leuchtschirm (11) mindestens eine Folie (17) umfasst, in und/oder auf der die Bereiche (21a,b) unterschiedlicher Leuchtdichte ausgebildet sind.

7. Inspektionsvorrichtung nach Anspruch 6, **dadurch gekennzeichnet, dass** die Beleuchtungseinheit (9) ferner mindestens eine Lichtquelle (13) und der Leuchtschirm (11) ferner eine Streuscheibe (15) umfasst und die Folie (17) zwischen der Lichtquelle (13) und der Streuscheibe (15) angeordnet ist.

8. Inspektionsvorrichtung nach mindestens einem der vorigen Ansprüche, **dadurch gekennzeichnet, dass** der Leuchtschirm (11) die Form eines zur Flasche (7) hin offenen Trichters hat.

9. Inspektionsvorrichtung nach einem der vorigen Ansprüche, **dadurch gekennzeichnet, dass** die Kamera (3) in Richtung des Flaschenbodens (7b) geneigt ist und ihre optische Achse (3b) mit der Hauptachse (7a) der Flasche (7) einen Winkel (α) von höchstens 80° einschließt.

10. Inspektionsvorrichtung nach einem der vorigen Ansprüche, ferner **gekennzeichnet durch**:
- ein Transportmittel (5), das die Flasche (7) **durch** einen Bildaufnahmebereich (3a) der Kamera (3) fährt; und
- eine auf dem Transportmittel (5) angeordnete drehbare Halterung (6) zur Aufnahme der Flasche (7).

11. Inspektionsvorrichtung nach einem der vorigen Ansprüche, ferner **gekennzeichnet durch**:
- eine Berechnungseinheit (29) zum Auswerten des erfassten Reflexes (27), zum Lokalisieren der Erhebungen und/oder Vertiefungen (7e, 7f) und Ermitteln einer Ist-Drehlage (ϕₗ) der Flasche (7).

12. Verfahren zum Erkennen von Erhebungen und/oder Vertiefungen (7e, 7f) auf Flaschen (7), insbesondere in einer Etikettiermaschine, unter Verwendung der Vorrichtung nach einem der vorigen Ansprüche, mit folgenden Schritten:
- Beleuchten der Flasche (7) mit dem Leuchtschirm (11), so dass der Lichtreflex (27) die Erhebungen und/oder Vertiefungen (7e, 7f) zumindest zeitweise überlappt; und
- Abbilden des Reflexes (27) mit mindestens einer Kamera (3).

13. Verfahren nach Anspruch 12, **dadurch gekennzeichnet, dass** die Flasche (7) durch einen Bildaufnahmebereich (3a) der Kamera (3) bewegt und dabei um ihre Längsachse (7a) gedreht wird, so dass der Reflex (27) in verschiedenen Drehlagen (ϕ) der Flasche (7) in Kamerabildern (25) abgebildet wird.

14. Verfahren nach Anspruch 13, **dadurch gekennzeichnet, dass** eine Berechnungseinheit (29) die Kamerabilder (25) auswertet, die Lage der Erhebungen und/oder Vertiefungen (7e, 7f) erkennt und daraus eine Ist-Drehlage (ϕₗ) der Flasche 7 ermittelt.

## Claims

1. Inspection device (1) for detecting elevations and/or indentations (7e, 7f) on bottles (7), in particular in a labelling machine, comprising:
- an illumination unit (9) having a luminescent screen (11) for producing a light reflex (27) on a bottle (7) to be examined, and
- at least one camera (3) for capturing the light reflex (27),
**characterised in that**
regions (21a, 21b) of different luminance are formed on the luminescent screen (11), and
the transition of the luminance between the regions (21a, 21b) of different luminance is gradual.

2. Inspection device according to claim 1, **characterised in that** the regions (21a, 21b) of different luminance are arranged in a striped pattern (21).

3. Inspection device according to claim 2, **characterised in that** the striped pattern (21) includes two to four dark stripes (21a).

4. Inspection device according to at least one of the preceding claims, **characterised in that** the regions (21a, 21b) of different luminance alternate in the horizontal direction.

5. Inspection device according to at least one of the preceding claims, **characterised in that** the regions (21a, 21b) of different luminance are formed as regions with different light permeability.

6. Inspection device according to at least one of the preceding claims, **characterised in that** the luminescent screen (11) comprises at least one film (17) in and/or on which the regions (21a, 21b) of different luminance are formed.

7. Inspection device according to claim 6, **characterised in that** the illumination unit (9) also comprises a light source (13) and the luminescent screen (11) also comprises a diffusing panel (15), and the film (17) is arranged between the light source (13) and the diffusing panel (15).

8. Inspection device according to at least one of the preceding claims, **characterised in that** the luminescent screen (11) has the form of a funnel which is open toward the bottle (7).

9. Inspection device according to any one of the preceding claims, **characterised in that** the camera (3) is inclined in the direction of the bottle base (7b) and its optical axis (3b) encloses an angle (α) of at most 80° with the main axis (7a) of the bottle (7).

10. Inspection device according to any one of the preceding claims, also **characterised by**:
- a transportation means (5) which moves the bottle (7) through an image recording region (3a) of the camera (3), and
- a holding device (6), rotatably arranged on the transportation means (5), for receiving the bottle (7).

11. Inspection device according to any one of the preceding claims, also **characterised by**:
- a calculating unit (29) for evaluating the detected reflex (27), for localising the elevations and/or indentations (7e, 7f) and determining an actual rotational position (ϕₗ) of the bottle (7).

12. Method for detecting elevations and/or indentations (7e, 7f) on bottles (7), in particular in a labelling machine, using the device according to any one of the preceding claims, comprising the following steps:
- illuminating the bottle (7) with the luminescent screen (11), so the light reflex (27) at least temporarily overlaps the elevations and/or indentations (7e, 7f), and
- imaging the reflex (27) using at least one camera (3).

13. Method according to claim 12, **characterised in that** the bottle (7) moves through an image recording region (3a) of the camera (3) and is rotated about its longitudinal axis (7a) in the process, so the reflex (27) is imaged in camera images (25) in different rotational positions (ϕ) of the bottle (7).

14. Method according to claim 13, **characterised in that** a calculating unit (29) evaluates the camera images (25), identifies the position of the elevations and/or indentations (7e, 7f) and determines therefrom an actual rotational position (ϕₗ) of the bottle (7).

## Revendications

1. Dispositif d'inspection (1) pour détecter des bosses et/ou des creux (7e, 7f) sur des bouteilles (7), en particulier dans une machine d'étiquetage, avec :
- une unité d'éclairage (9) pourvue d'un écran luminescent (11) pour produire un reflet de lumière (27) sur une bouteille à examiner (7) ; et
- au moins une caméra (3) pour enregistrer le reflet de lumière (27) ;
**caractérisé en ce que** des zones (21a, 21b) de luminances différentes sont formées sur l'écran luminescent (11) ; et
la transition de la luminance entre les zones (21a, 21b) de luminances différentes est progressive.

2. Dispositif d'inspection selon la revendication 1, **caractérisé en ce que** les zones (21a, 21b) de luminances différentes sont disposées en un motif à bandes (21).

3. Dispositif d'inspection selon la revendication 2, **caractérisé en ce que** le motif à bandes (21) comprend de deux à quatre bandes sombres (21a).

4. Dispositif d'inspection selon l'une au moins des revendications précédentes, **caractérisé en ce que** les zones (21a, 21b) de luminances différentes alternent dans le sens horizontal.

5. Dispositif d'inspection selon l'une au moins des revendications précédentes, **caractérisé en ce que** les zones (21a, 21b) de luminances différentes sont conçues comme des zones de translucidités différentes.

6. Dispositif d'inspection selon l'une au moins des revendications précédentes, **caractérisé en ce que** l'écran luminescent (11) comprend au moins un film (17) dans et/ou sur lequel sont formées les zones (21a, b) de luminances différentes.

7. Dispositif d'inspection selon la revendication 6, **caractérisé en ce que** l'unité d'éclairage (9) comprend par ailleurs au moins une source de lumière (13), l'écran luminescent (11) comprend par ailleurs un panneau diffusant (15), et le film (17) est disposé entre la source de lumière (13) et le panneau diffusant (15).

8. Dispositif d'inspection selon l'une au moins des revendications précédentes, **caractérisé en ce que** l'écran luminescent (11) a la forme d'un entonnoir ouvert en direction de la bouteille (7).

9. Dispositif d'inspection selon l'une des revendications précédentes, **caractérisé en ce que** la caméra (3) est inclinée en direction du fond (7b) de la bouteille, et son axe optique (3b) forme avec l'axe principal (7a) de la bouteille (7) un angle (α) de 80° au maximum.

10. Dispositif d'inspection selon l'une des revendications précédentes, également **caractérisé par** :
- un moyen de transport (5) qui fait passer la bouteille (7) à travers une zone de prise de vues (3a) de la caméra (3) ; et
- une fixation rotative (6), disposée sur le moyen de transport (5), pour recevoir la bouteille (7).

11. Dispositif d'inspection selon l'une des revendications précédentes, également **caractérisé par** :
- une unité de calcul (29) pour analyser le reflet (27) enregistré, pour localiser les bosses et/ou les creux (7e, 7f) et pour déterminer une position de rotation réelle (ϕ_{I}) de la bouteille (7).

12. Procédé pour détecter des bosses et/ou des creux (7e, 7f) sur des bouteilles (7), en particulier dans une machine d'étiquetage, à l'aide du dispositif selon l'une des revendications précédentes, avec les étapes suivantes :
- éclairage de la bouteille (7) avec l'écran luminescent (11), de telle sorte que le reflet de lumière (27) couvre au moins temporairement les bosses et/ou les creux (7e, 7f) ; et
- représentation du reflet (27) avec au moins une caméra (3).

13. Procédé selon la revendication 12, **caractérisé en ce que** la bouteille (7) est déplacée à travers une zone de prise de vues (3a) de la caméra (3), tout en tournant sur son axe longitudinal (7a), de sorte que le reflet (27) est représenté sur des images de caméra (25) dans différentes positions de rotation (ϕ) de la bouteille (7).

14. Procédé selon la revendication 13, **caractérisé en ce qu'**une unité de calcul (29) analyse les images de caméra (25), détecte la position des bosses et/ou des creux (7e, 7f) et détermine à partir de là une position de rotation réelle (ϕ_{I}) de la bouteille (7).
